(19) Europäisches Patentamt / European Patent Office / Office européen des brevets

(11) **EP 3 637 770 A1**

(12) **EUROPEAN PATENT APPLICATION**
published in accordance with Art. 153(4) EPC

(43) Date of publication:
**15.04.2020 Bulletin 2020/16**

(51) Int Cl.:
*H04N 19/146* (2014.01)     *H04N 19/142* (2014.01)
*H04N 7/24* (2011.01)

(21) Application number: **18920187.4**

(22) Date of filing: **28.09.2018**

(86) International application number:
**PCT/CN2018/108245**

(87) International publication number:
**WO 2020/042269 (05.03.2020 Gazette 2020/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2018 CN 201811011679**

(71) Applicant: **Wangsu Science & Technology Co., Ltd.**
**Shanghai 200030 (CN)**

(72) Inventors:
• **HUANG, Xuehui**
  **Shanghai 200030 (CN)**
• **LV, Shibiao**
  **Shanghai 200030 (CN)**

(74) Representative: **Hanna Moore + Curley**
**Garryard House**
**25/26 Earlsfort Terrace**
**Dublin 2, D02 PX51 (IE)**

(54) **CODE RATE ADJUSTMENT METHOD AND DEVICE FOR ENCODING PROCESS**

(57) A method for bitrate adjustment in an encoding process includes: for a target video frame that has completed a complexity analysis, determining a complexity adjustment factor of the target video frame according to a frame type and a duration of the target video frame; acquiring a to-be-encoded current video frame, and calculating a long-term complexity corresponding to the current video frame according to complexities and complexity adjustment factors of target video frames that have completed the complexity analysis; determining a target number of bits per pixel corresponding to the current video frame according to the long-term complexity and a preset reference number of bits per pixel; and determining a target bitrate used by a current encoding according to the target number of bits per pixel and configuration parameters of a target video to which the current video frame belongs.

FIG. 1

EP 3 637 770 A1

**Description**

FIELD OF DISCLOSURE

The present disclosure generally relates to the field of Internet technology and, more particularly, relates to a method and device for bitrate adjustment in an encoding process.

BACKGROUND

With the continuous development of Internet technology, a large number of webcast platforms have emerged. The webcast platforms bring a real-time video experience to users, and also put higher requirements on the users' network bandwidths. At present, the webcast platforms generally limit the bitrates of the live videos, so that the bitrates after the limitation may adapt to the bandwidths that the users can provide, thereby providing the users with a smooth video experience.

Currently, when limiting the bitrate of a live video, a bitrate upper limit is usually set, and the real-time bitrates of the live video usually may not exceed the bitrate upper limit. However, if the bitrate upper limit is set too low, the picture quality of the live video may be poor. If the bitrate upper limit is set too high, bandwidth is wasted. Therefore, it is often not convenient to adjust the bitrates of the live videos by setting the bitrate upper limits.

BRIEF SUMMARY OF THE DISCLOSURE

The objective of the present disclosure is to provide a method and device for bitrate adjustment in an encoding process, which may improve convenience for bitrate adjustment.

To achieve the above objective, in one aspect, the present disclosure provides a method for bitrate adjustment in an encoding process. The method includes: for a target video frame that has completed a complexity analysis, determining a complexity adjustment factor of the target video frame according to a frame type and a duration of the target video frame; acquiring a to-be-encoded current video frame, and calculating a long-term complexity corresponding to the current video frame according to complexities and complexity adjustment factors of target video frames that have completed the complexity analysis; determining a target number of bits per pixel corresponding to the current video frame according to the long-term complexity and a preset reference number of bits per pixel; and determining a target bitrate used by a current encoding according to the target number of bits per pixel and configuration parameters of a target video to which the current video frame belongs.

To achieve the above objective, in another aspect, the present disclosure further provides a device for bitrate adjustment in an encoding process. The device includes: a complexity adjustment factor determination unit that is configured to, for a target video frame that has completed a complexity analysis, determine a complexity adjustment factor of the target video frame according to a frame type and a duration of the target video frame; a long-term complexity calculation unit that is configured to acquire a to-be-encoded current video frame, and calculate a long-term complexity corresponding to the current video frame according to complexities and complexity adjustment factors of target video frames that have completed the complexity analysis; a target number of bits per pixel determination unit that is configured to determine a target number of bits per pixel corresponding to the current video frame according to the long-term complexity and a preset reference number of bits per pixel; and a target bitrate determination unit that is configured to determine a target bitrate used by a current encoding according to the target number of bits per pixel and configuration parameters of a target video to which the current video frame belongs.

To achieve the above objective, in another aspect, the present disclosure further provides a device for bitrate adjustment in an encoding process. The device includes a processor and a memory. The memory is used for storing a computer program that, when executed by the processor, implements the above-described method.

As can be seen from the above, the technical solutions provided by the present disclosure may perform the complexity analysis on video frames in the target video, so as to obtain the complexity of each target video frame. This complexity may reflect the richness of the content in the target video frames. In general, the richer the content, the higher the corresponding bitrate. Based on this, in the present disclosure, the complexity adjustment factor of a target video frame may be determined in advance according to the frame type and duration of the target video frame. The complexity adjustment factor may be used as a weight for adjusting the bitrate. Next, for a to-be-encoded current video frame, the long-term complexity corresponding to the current video frame may be calculated based on the target video frames, before and after the current video frame, that have completed the complexity analysis. By comprehensively analyzing the long-term complexity and the preset reference number of bits per pixel, the target number of bits per pixel corresponding to the current video frame may be determined. According to the target number of bits per pixel and the configuration parameters of the target video to which the current video frame belongs, the target bitrate value used in the current encoding may be eventually determined. Later, according to the actual needs, the bitrate in the encoding process may be adjusted according to the target bitrate. As can be seen above, the present disclosure may first analyze the picture complexity of a to-be-encoded video frame, and then adjust the actual bitrate according to the analyzed picture complexity, thereby making the picture richness and the eventual bitrate to dynamically match each other. In addition, the users' watching experience can be ensured without wasting bandwidth. Therefore, the convenience of bitrate adjustment is greatly improved.

BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.

FIG. 1 is a flowchart of a method for bitrate adjustment in an encoding process according to some embodiments of the present disclosure;
FIG. 2 is a functional block diagram of a device for bitrate adjustment in an encoding process according to some embodiments of the present disclosure; and
FIG. 3 is a schematic structural diagram of a device for bitrate adjustment in an encoding process according to some embodiments of the present disclosure.

DETAILED DESCRIPTION

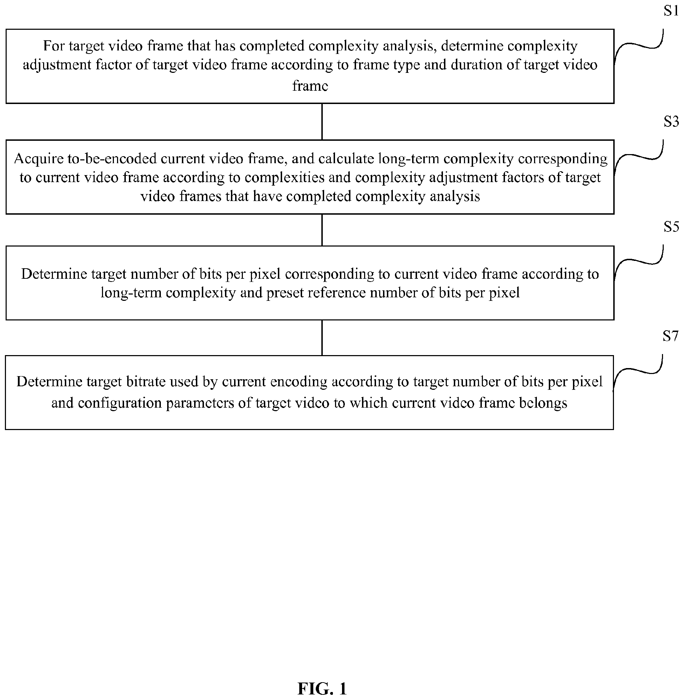

To make the objective, technical solutions, and advantages of the present disclosure clearer, the implementations of the present disclosure will be made in detail hereinafter with reference to the accompanying drawings.
The present disclosure provides a method for bitrate adjustment in an encoding process. Referring to FIG. 1, the method may include the following steps.
S1: For a target video frame that has completed the complexity analysis, determine a complexity adjustment factor of the target video frame according to a frame type and a duration of the target video frame.
In the disclosed implementation, when analyzing the complexity of the current video frame, in order to reduce the amount of data processed each time, the current video frame may be split into a specified number of picture blocks. The split picture blocks may have the same size. In addition, the size of the split picture blocks may be determined according to a video encoding format corresponding to the current video frame. Specifically, the size of the split picture blocks may be consistent with the size of the largest encoding unit in the video encoding format. For example, if the video encoding format corresponding to the current video frame is an H.264 encoding format, the size of the split picture blocks may be 16*16. For another example, if the video encoding format corresponding to the current video frame is an H.265 encoding format, the size of the split picture blocks may be 64*64. The size of the split picture blocks may be in units of pixels. Accordingly, in a 16*16 picture block, both the horizontal and vertical directions may include 16 pixels.
In one implementation, considering that the actual resolution of the current video frame may be high or low, if the picture blocks are simply split according to the encoding format, the size of the split picture blocks may be inappropriate. For example, if the resolution of the current video frame is low, after the picture blocks are split according to the above-described method, each picture block may appear very large. For another example, if the resolution of the current video frame is high, after the picture blocks are split according to the above-described method, each picture block may appear really small. Therefore, in real applications, after determining the size of the picture blocks according to the video encoding format, the size of the split picture blocks may also be adjusted according to the actual resolution of the current video frame. For example, if the size of the split picture blocks is too large, the size of the picture blocks may be appropriately reduced, and thus more picture blocks will be split. Conversely, if the size of the split picture blocks is too small, the size of the picture blocks may be appropriately increased, and thus fewer picture blocks will be split.
In one implementation, for a current video frame with a really large resolution, even if the frame is split into multiple picture blocks, the amount of data that needs to be processed for each picture block may be still quite large. In this situation, the current video frame may be downsampled in advance to reduce the resolution of the current video frame, thereby reducing the amount of data that needs to be processed later. Specifically, after obtaining the to-be-processed current video frame, the resolution of the current video frame may be determined. If the resolution of the current video frame is greater than or equal to a specified resolution threshold, it means that the resolution of the current video frame is too high. At this moment, the current video frame may be downsampled, to obtain a downsampled video frame. For example, for a current video frame with a resolution of 1280*720, it may be downsampled to a resolution of 640*360. For the original video frame of the current video frame, the size of the corresponding picture blocks may be determined according to the video encoding format. For example, if the current video frame with a resolution of 1280*720 has a corresponding picture block size of 16*16, after downsampling the current video frame, the size of the picture blocks may be correspondingly reduced. Specifically, a downsampling coefficient may be obtained by dividing the downsampled resolution by the original resolution of the current video frame. Then, the size of the picture blocks for the original video frame may be scaled down by the downsampling coefficient, to obtain the size of the picture blocks corresponding to the downsampled video frame. For example, after downsampling the current video frame with a resolution of 1280*720 to a resolution of 640*360, the size of the picture blocks may be correspondingly changed from 16*16 to 8*8. In the disclosed implementation, when the original video frame of the current video frame is downsampled to obtain a downsampled video frame, the complexity of the downsampled video frame may be considered as the complexity of the current video frame.

In the disclosed implementation, when determining the complexity of the current video frame or the downsampled video frame, the complexity of each split picture block may be calculated in advance, and then the sum of the complexity of each picture block may be considered as the complexity of the current video frame. Specifically, when calculating the complexity of each picture block, an inter-frame prediction value and intra-frame prediction value of each picture block may be calculated first.

In the disclosed implementation, when calculating the inter-frame prediction value of a picture block, the coordinate values of a designated vertex of the picture block may be acquired, and the width and height for defining an area for motion search may be determined. Here, the specified vertex may be, for example, the vertex at the upper left corner of the picture block. The coordinate values of the specified vertex may be expressed as $(y, x)$, where $x$ represents the abscissa value of the specified vertex and y represents the ordinate value of the specified vertex. The motion search may refer to a process of, for a current picture block, searching for a picture block, in a previous video frame of the current video frame, that is similar to the current picture block. In real applications, the motion search is usually limited to an area that may be represented by the aforementioned width and height for defining the motion search area.

In the disclosed implementation, a plurality of different sets of search values may be determined according to the coordinate values of the specified vertex and the width and height for defining the motion search area. Here, each set of search values may include an abscissa value and an ordinate value. Specifically, in one example application, the plurality of sets of search values may be determined according to the following formulas:

$$|y - y_0| \leq SH$$

$$|x - x_0| \leq SW$$

where $x$ represents the abscissa value the specified vertex, y represents the ordinate value of the specified vertex, $y_0$ represents the ordinate value of a set of search values, SH represents the height of the motion search area, $x_0$ represents the abscissa value of the set of search values, and $SW$ represents the width of the motion search area. Accordingly, $(y_0, x_0)$ satisfying the above formulas may be used as a set of search values.

In the disclosed implementation, the search result corresponding to each set of search values may be respectively calculated. The set of search values corresponding to the smallest search result may be considered as the matching set of search values. Specifically, in one example application, the matching set of search values may be determined according to the following formula:

$$\underset{y_0, x_0}{argmin} \sum_{s=0}^{bh-1} \sum_{t=0}^{bw-1} \left| P_p(y+s, x+t) - P_{p-1}(s+y_0, t+x_0) \right|$$

where $bh$ represents the height of a picture block, $bw$ represents the width of the picture block, $s$ represents an arbitrary integer from 0 to $bh$-1, $t$ represents an arbitrary integer from 0 to $bw$-1, $P_p(y + s, x + t)$ represents the pixel value of a pixel with the coordinate values of $(y + s, x + t)$ in the current video frame, $P_{p-1}(s + y_0, t + x_0)$ presents the pixel value of a pixel with the coordinate values of $(s + y_0, t + x_0)$ in a previous video frame adjacent to the current video frame.

Accordingly, by substituting different sets of search values into the above formula, the eventual matching set of search values may be obtained.

In the disclosed implementation, after determining the matching set of search values, the inter-frame prediction value of the picture block may be determined according to the matching set of search values and the pixel value of the previous video frame adjacent to the current video frame. Specifically, in one example application, the inter-frame prediction value of the picture block may be determined according to the following formula:

$$B_{inter}(i, j) = P_{p-1}(i + y_0, j + x_0)$$

where $B_{inter}(i,j)$ represents the inter-frame prediction value corresponding to the pixel with the coordinate values of $(i,j)$ in the picture block, $P_{p-1}(i + y_0, j + x_0)$ represents the pixel value of a pixel with the coordinate values of $(i + y_0, j + x_0)$ in a previous video frame adjacent to the current video frame, $i$ represents an arbitrary integer from 0 to $bh$-1, and $j$ represents an arbitrary integer from 0 to $bw$-1.

Accordingly, the determined inter-frame prediction value of the picture block may be a matrix, where each element in the matrix may correspond to each pixel in the picture block.

In the disclosed implementation, when calculating the intra-frame prediction value of the picture block, a plurality of candidate prediction values at the specified directions may be determined according to the current intra-frame prediction method. Specifically, the current intra-frame prediction method may be implemented by, for example, an intra-frame prediction mode in an encoding process with an encoding format of H.264, H.265, or VP9, etc. The existing intra-frame prediction mode may obtain different candidate prediction values for different prediction directions. In the disclosed implementation, only the candidate prediction values at the specified directions, including the horizontal direction, the 45-degree angular direction, the vertical direction, and the 135-degree angular direction, may be selected. For a candidate prediction value in each specified direction, a corresponding evaluation value may be calculated respectively. For example, an evaluation value corresponding to the candidate prediction value of a target specified direction, among the candidate prediction values of the plurality of specified directions, may be calculated according to the following formula:

$$SAD = \sum_{s=0}^{bh-1} \sum_{t=0}^{bw-1} \left| P_p(y + s, x + t) - C_{intra}(s,t) \right|$$

where $SAD$ represents the evaluation value corresponding to the candidate prediction value in the target specified direction, $bh$ represents the height of the picture block, $bw$ represents the width of the picture block, $s$ represents an arbitrary integer from 0 to $bh$-1, t represents an arbitrary integer from 0 to $bw$-1, $C_{intra}(s,t)$ represents the candidate prediction value corresponding to a pixel with the coordinate values of (s, $t$) in the specified direction, and $P_p(y + s, x + t)$ represents the pixel value of a pixel with the coordinate values of $(y + s, x + t)$ in the current frame.

In the disclosed implementation, for the candidate prediction value in each specified direction, its corresponding evaluation value may all be calculated by using the above formula. Then, the candidate prediction value corresponding to the smallest evaluation value may be considered as the intra-frame prediction value of the picture block.

In the disclosed implementation, after calculating the inter-frame prediction value and the intra-frame prediction value of the picture block, the corresponding time complexity and space complexity may be calculated. Here, the time complexity may reflect the degree of picture change between the current video frame and the preceding video frame, and the space complexity may reflect the complexity of texture details in the current video frame.

In the disclosed implementation, the time complexity of the picture block may be determined based on a difference between the inter-frame prediction value of the picture block and the original pixel values of the picture block. Specifically, the inter-frame prediction value of the picture block is a matrix, where each element in the matrix has a one-to-one correspondence with the pixels of the picture block. Accordingly, when calculating the difference between the inter-frame prediction value of the picture block and the original pixel values of the picture block, the inter-frame prediction value may be subtracted from the original pixel values at the same positions, to obtain the differences at those positions. Accordingly, the resulting difference is also a matrix. In the disclosed implementation, after the difference in the matrix form is calculated, discrete cosine transform may be performed for the difference, and the sum of the absolute value of each coefficient after the discrete cosine transform may be considered as the time complexity of the picture block.

Similarly, when calculating the space complexity, a discrete cosine transform may be performed on the difference between the intra-frame prediction value of the picture block and the original pixel values of the picture block, and the sum of the absolute value of each coefficient after the discrete cosine transform may be considered as the space complexity of the picture block.

In the disclosed implementation, after obtaining the time complexity and space complexity of the picture block, the smaller of the time complexity and the space complexity may be considered as the complexity of the picture block. In this way, since the current video frame comprises a specified number of picture blocks, the complexity of the current video frame may be determined according to the complexity of each picture block of the specified number of picture blocks. Specifically, the sum of the complexity of each picture block may be considered as the complexity of the current video frame. This then completes the process of determining the complexity of the current video frame.

In one implementation, the process of analyzing the complexity of the current video frame may be performed before encoding the current video frame. Specifically, in real applications, if the internal information of the encoder is unavailable in the encoding process, for the current video frame, the picture complexity of the current video frame may be analyzed first, then the current video frame is input into the encoder for encoding. If the internal information of the encoder is available in the encoding process, the current video frame may be directly input into the encoder. After the encoder recognizes the frame type of the current video frame, the analysis of the image complexity of the current video frame is then performed. Here, the internal information may be a result of the current video frame type identified by the encoder. If the internal information is unavailable, it means that the frame type of the current video frame cannot be identified when analyzing the complexity of the current video frame. If the internal information is available, it means that the frame type of the current video frame has been determined when analyzing the picture complexity for the current video frame. Here, the frame type of the current video frame may be a B frame, an I frame, or a P frame. The I frame may be referred to as an internal image frame or a key frame. An I frame may be considered as an independent frame, which does not depend on other adjacent video frames. The P frame may be referred to as a forward search frame, and the B frame may be referred to as a bidirectional search frame. The P frame and B frame may be dependent on a preceding video frame or two adjacent video frames.

In the disclosed implementation, if the frame type of the current video frame cannot be identified, or the current video frame is identified as a non-internal image frame (i.e., non-I frame), it means that the current video frame needs to rely on another video frame(s). At this point, the inter-frame prediction value and the intra-frame prediction value of the picture block need to be calculated according to the above-described methods, to determine the time complexity reflecting the degree of picture change between the current video frame and the preceding video frame and the space complexity reflecting the complexity of the texture details within the current video frame. If the current video frame is identified as an internal image frame, it means that the current video frame does not rely on another video frame(s). Accordingly, there is no need to determine the time complexity. Instead, only the intra-frame prediction value of the picture block may be calculated, and the space complexity determined based on the difference between the intra-frame prediction value of the picture block and the original pixel values of the picture block may be considered as the complexity of the picture block.

In the disclosed implementation, a video frame that has completed the complexity analysis may be considered as a target video frame. After the complexity analysis is completed, a complexity adjustment factor for a target video frame may also be determined according to the frame type and duration of the target video frame. The complexity adjustment factor may be used to measure the weights of different target video frames, so that the complexity of a target video frame may be adjusted. Specifically, in one example application, the complexity adjustment factor of a target video frame may be determined according to the following formula:

$$W_t = W(type) \times W(duration)$$

where $W_t$ represents the complexity adjustment factor for the $t$-th target video frame, $W(type)$ represents the weight coefficient corresponding to the frame type of the $t$-th target video frame, and $W(duration)$ represents the weight coefficient corresponding to the duration of the $t$-th target video frame.

In the disclosed implementation, if the internal information of the encoder is available, the frame type of a target video frame may be identified. Accordingly, different values may be set for $W(type)$ according to different frame types. For example, if a target video frame is a B frame, $W(type)$ may be set to a value less than one; and if a target video frame is a P frame or an I frame, $W(type)$ may be set to 1. Apparently, in real applications, the value for $W(type)$ may be also set according to some other rules. The above discussions of the B frame, the P frame, and the I frame is merely for interpreting the technical solutions of the present disclosure, but does not mean that the technical solutions of the present disclosure are limited to the above example of set $W(type)$ values. In addition, the $W(duration)$ value may be set according to the length of the duration. Specifically, the longer the duration, the larger the corresponding value may be.

In one implementation, if the internal information of the encoder is unavailable, then the frame type of a target video frame cannot be identified. In this case, $W(type)$ may be uniformly set to 1, thereby simplifying the calculation process.

S3: Acquire a to-be-encoded current video frame, and calculate a long-term complexity corresponding to the current video frame according to complexities and complexity adjustment factors of target video frames that have completed the complexity analysis.

In the disclosed implementation, target video frames that have completed the complexity analysis may be placed in the processing queue of the encoder. In this way, the encoder may sequentially read each target video frame from the processing queue for encoding according to a "first in first out" principle. After obtaining a to-be-encoded current video frame, the encoder may calculate the long-term complexity corresponding to the current video frame. The long-term complexity may be a complexity that is determined based on the complexities and complexity adjustment factors of the target video frames that have completed the complexity analysis, and is further averaged and weighted overall on the target video frames before and after the current video frame. Therefore, when calculating the long-term complexity, the influence of target video frames, located before and after the current video frame, on the current video frame may be fully considered. Specifically, the frame serial number difference between the last target video frame that has completed the complexity analysis and the current video frame may be first determined. Here, the last target video frame that has completed the complexity analysis may be the target video frame at the end of the processing queue, and the current video frame that the encoder expects to encode may be a target video frame at the forefront of the processing queue. In the disclosed implementation, if the internal information of the encoder is available, the serial number of the current video frame may be read directly. Accordingly, by subtracting the serial number of the current video frame from the serial number of the last target video frame that has completed the complexity analysis, the aforementioned frame serial number difference may be obtained. However, if the internal information of the encoder is unavailable, the serial number of the current video frame cannot be obtained. At this moment, the frame serial number difference needs to be estimated.

In one implementation, the maximum number of consecutive frames (Bf) of the bidirectional search frame (B frame) of the encoder during the encoding process may be obtained. The first number (K) of video frames that have currently transmitted to the encoder and the second number (L) of video frames that the encoder has currently output may be also determined. Next, the total number of frames (L+Bf) of the second number (L) of frames and the maximum number of consecutive frames (Bf) may be calculated. The difference (K-(L+Bf)) between the first number of frames (K) and the total number of frames (L+Bf) may be considered as the frame serial number difference.

In real applications, when estimating the frame serial number difference using the above approach, if the calculated result is less than 0, the frame serial number difference may be set directly to 0. If the calculated result is greater than or equal to 0, the actual result of the calculation may be considered as the frame serial number difference.

In the disclosed implementation, after determining the frame serial number difference, the pre-frame influence coefficients "decay" and post-frame influence coefficients "grow" may be respectively obtained. Here, a pre-frame influence coefficient may be used to indicate the influence of a video frame, located before the current video frame, on the current video frame, and a post-frame influence coefficient may be used to indicate the influence of a video frame, located after the current video frame, on the current video frame. Since the bitrate adjustment affects the bitrate of a later encoded frame, for "decay", a positive number less than 1 needs to be selected. In this way, as the encoding progresses, the earlier a frame is encoded, the less the influence of the complexity of an encoded frame on the bitrate of a later encoded frame. The complexity of a frame that has not been encoded has a greater reference value to the bitrate of the currently encoded frame. Therefore, for "grow", a value greater than or equal to 1 may be selected.

In the disclosed implementation, by putting all the determined parameters together, the long-term complexity corresponding to the current video frame may be calculated based on the complexities and the corresponding complexity adjustment factors of the target video frames that have completed the complexity analysis, the frame serial number difference, the pre-frame influence coefficients, and the post-frame influence coefficients. Specifically, the long-term complexity may be calculated according to the following formula:

$$LC = \frac{\sum_{i=0}^{t-T} C_i * W_i * decay^{t-T-i} + \sum_{i=t-T+1}^{t} C_i * W_i * grow}{\sum_{i=0}^{t-T} decay^{t-T-i} + \sum_{i=t-T+1}^{t} grow}$$

where $LC$ represents the long-term complexity after the further adjustment, $t$ represents the frame serial number of the last target video frame that has completed the complexity analysis, T represents the frame serial number difference, $C_i$ represents the complexity of the i-th target video frame, $W_i$ represents the complexity adjustment factor of the i-th target video frame, $decay$ represents a pre-frame influence coefficient, and grow represents a post-frame influence coefficient.

In one implementation, when the complexity analysis is performed, the original video frame may be downsampled, and thus the complexity analysis may be performed on a downsampled video frame. In this situation, when calculating the long-term complexity, a ratio (scale) between the resolution of the original video frame and the resolution of the downsampled video frame may also be determined. Based on the ratio, the calculated long-term complexity may be further adjusted. For example, the resolution of an original video frame is 1000*800. When the complexities of the video content are analyzed, the original video frame is downsampled to a resolution of 500*400. Then, the scale may be the ratio of the two resolutions, i.e., 4.

In one implementation, considering the above video with the same long-term complexity, if different encoding parameters of the encoder are used for encoding, the bitrate required to obtain an output video of the same quality is also different. In view of this, an encoding adjustment factor that matches the encoding parameters of the encoder may be obtained. The long-term complexity adjusted based on the above ratio may be further adjusted based on the encoding adjustment factor. Here, according to different encoding parameter settings of the encoder, different corresponding parameter patterns may be used. In the disclosed implementation, corresponding weight values may be set in advance for each parameter pattern, thereby generating an encoding adjustment factor that matches each parameter pattern.

In one example application, the following formula may be used to determine the long-term complexity after further adjustment:

$$LC = M * scale * \frac{\sum_{i=0}^{t-T} C_i * W_i * decay^{t-T-i} + \sum_{i=t-T+1}^{t} C_i * W_i * grow}{\sum_{i=0}^{t-T} decay^{t-T-i} + \sum_{i=t-T+1}^{t} grow}$$

where *M* represents the encoding adjustment factor and *scale* represents the above ratio.

S5: Determine the target number of bits per pixel corresponding to the current video frame according to the long-term complexity and a preset reference number of bits per pixel.

In the disclosed implementation, when determining the target bitrate to be used for the current encoding, the target number of bits per pixel corresponding to the current video frame may be determined first. Specifically, in real applications, a long-term complexity reference value is usually pre-configured in advance. At the same time, the reference number of bits per pixel corresponding to the long-term complexity reference value is also configured. Accordingly, a ratio between the long-term complexity and the long-term complexity reference value may be calculated, which may be then used as a bitrate adjustment factor. Next, the target number of bits per pixel may be calculated based on the calculated ratio and the preset reference number of bits per pixel. Here, the target number of bits per pixel may be considered as a function of the bitrate adjustment factor. As the bitrate adjustment factor becomes larger, the target number of bits per pixel also becomes larger. Based on this principle, in real applications, the target number of bits per pixel may be determined according to any one of the following formulas:

$$BPP = rf^a * BPP_{base},$$

$$BPP = BPP_{base} * log_2(1 + rf),$$

and

$$BPP = \frac{(a+1)*rf}{a+rf} BPP_{base}$$

where *BPP* represents the target number of bits per pixel, *a* represents a preset index parameter, *rf* represents the calculated ratio, and *BPP$_{base}$* represents the preset reference number of bits per pixel.

In the above first formula for calculating the target number of bits per pixel, in order to prevent the bitrate from increasing too fast as the long-term complexity becomes larger, the preset index parameter may be set to a positive number less than or equal to 1. In this way, as *rf* becomes larger, the growth rate of *BPP* will become smaller and smaller.

For the second formula, when *rf* is really large, the growth rate of *BPP* may have a smaller growth rate when compared to the first formula.

For the third formula, *BPP* will have an upper limit, which is (*a* + 1)*BPP$_{base}$*. At this moment, it is easier to control the upper limit of *BPP*.

It should be noted that, in one specific implementation, the functional relationship between the target number of bits per pixel and the bitrate adjustment factor may be customized according to certain specific requirements, which then allows flexible control of the sensitivity of bitrate change in different complexity intervals, thereby making the bitrate adjustment more flexible.

S7: Determine a target bitrate used by the current encoding according to the target number of bits per pixel and configuration parameters of the target video to which the current video frame belongs.

In the disclosed implementation, after determining the target number of bits per pixel, the target bitrate used by the current encoding may be determined according to the target number of bits per pixel and the configuration parameters of the target video to which the current video frame belongs. Specifically, the configuration parameters of the target video may include a frame rate of the target video, a width and a height of a video frame in the target video, and the like. Accordingly, in one example application, the target bitrate used for the current encoding may be determined according to the following formula:

$$R = BPP * W * H * Fr$$

where R represents the target bitrate used for the current encoding, *BPP* represents the target number of bits per pixel, *W* represents the width of a video frame in the target video, *H* represents the height of a video frame in the target video, and *Fr* represents the frame rate of the target video.

In the disclosed implementation, as the encoding process proceeds, the process of analyzing the complexity of the video picture and the process of calculating the target bitrate may be performed at the same time according to the above-described methods.

After determining the target bitrate, if the current video frame satisfies the criteria for a bitrate adjustment, the bitrate for the current encoding may be adjusted to the target bitrate, and the current video frame is encoded according to the target bitrate. Specifically, the criteria for bitrate adjustment may be set according to actual situations. For example, if the used encoder supports frame-by-frame bitrate adjustment, then the bitrate adjustment may be performed according to the calculated target bitrate before encoding each frame. If the used encoder only supports bitrate adjustment before each key frame, then the bitrate adjustment may be performed according to the instantly calculated target bitrate when encoding each key frame. In one specific implementation, in addition to considering the timing for the bitrate adjustment supported by the encoder, it is also necessary to consider the specific requirements. At this moment, the bitrate may be adjusted when both the criteria for bitrate adjustment supported by the encoder and customized criteria in the specific requirements are satisfied at the same time. The customized criteria may include, for example, the following:

(1) the bitrate may only be adjusted once in 1 minute;
(2) perform image analysis, and perform bitrate adjustment only until a scene switch is identified;
(3) after receiving a bitrate adjustment command sent actively by a user, the bitrate adjustment is performed next time when the timing for bitrate adjustment supported by the encoder is satisfied.

Apparently, the above examples are merely a few of the customized criteria. In practice, there will be more customized criteria, which is not limited in the present disclosure.

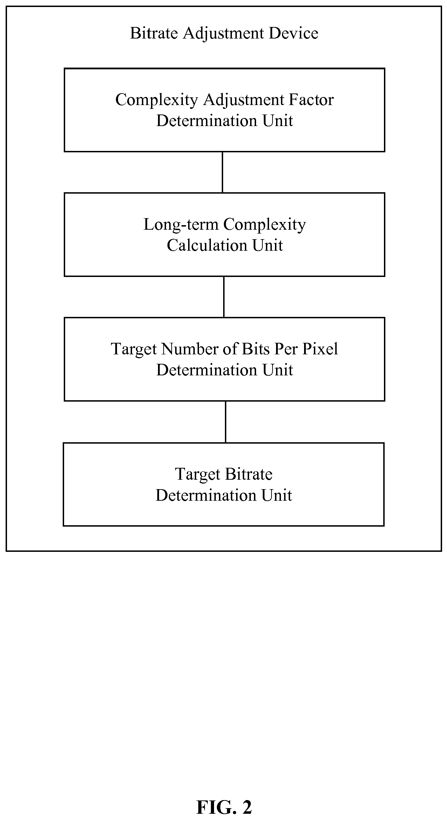

Referring to FIG. 2, the present disclosure further provides a device for bitrate adjustment in an encoding process. The device includes:

a complexity adjustment factor determination unit that is configured to, for a target video frame that has completed a complexity analysis, determine a complexity adjustment factor of the target video frame according to a frame type and a duration of the target video frame;
a long-term complexity calculation unit that is configured to acquire a to-be-encoded current video frame, and calculate a long-term complexity corresponding to the current video frame according to complexities and complexity adjustment factors of target video frames that have completed the complexity analysis;
a target number of bits per pixel determination unit that is configured to determine a target number of bits per pixel corresponding to the current video frame according to the long-term complexity and a preset reference number of bits per pixel; and
a target bitrate determination unit that is configured to determine a target bitrate used by a current encoding according to the target number of bits per pixel and configuration parameters of a target video to which the current video frame belongs.

In one implementation, the long-term complexity calculation unit includes:

a frame serial number difference determination module that is configured to determine a frame serial number difference between the last target video frame that has completed the complexity analysis and the current video frame;
an influence coefficient acquisition module that is configured to obtain pre-frame influence coefficients and post-frame influence coefficients respectively, where a pre-frame influence coefficient is used to indicate an influence of a video frame, located before the current video frame, on the current video frame, and a post-frame influence coefficient is used to indicate an influence of a video frame, located after the current video frame, on the current video frame; and
a calculation module that is configured to calculate the long-term complexity corresponding to the current video frame according to the complexities and the corresponding complexity adjustment factors of the target video frames, the frame serial number difference, the pre-frame influence coefficients, and the post-frame influence coefficients.

In one implementation, the frame serial number difference determination module includes:

a frame number acquisition module that is configured to, if a frame serial number of the current video frame cannot be obtained, obtain a maximum number of consecutive frames of bidirectional search frame of an encoder during the encoding, and determine a first number of video frames that currently have been transmitted to the encoder and a second number of video frames that currently have been output by the encoder; and
a difference calculation module that is configured to calculate a sum of the second number of video frames and the maximum number of consecutive frames, and determine a difference, between the first number of video frames and the sum of the second number of video frames and the maximum number of consecutive frames, as the frame serial number difference.

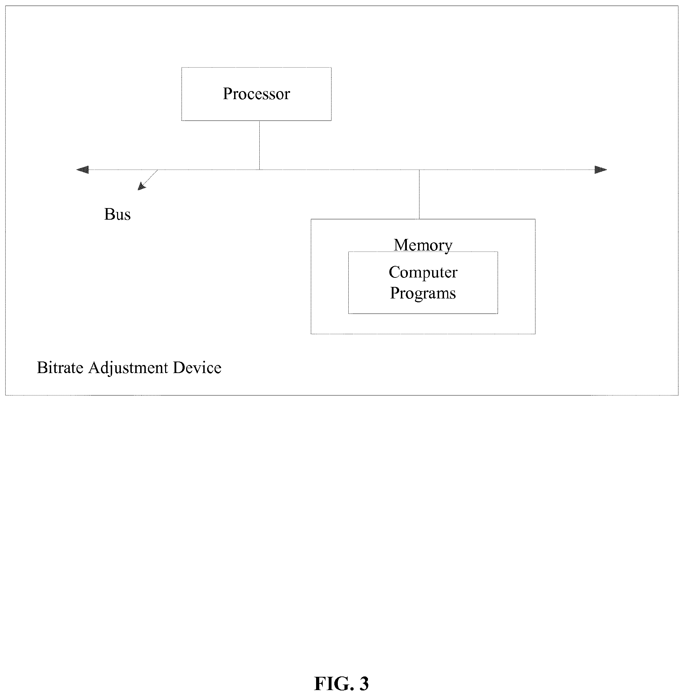

Referring to FIG. 3, the present disclosure further provides a device for bitrate adjustment in an encoding process. The device includes a memory and a processor, where the memory is used to store a computer program that, when executed by the processor, may implement the above-described methods for bitrate adjustment in an encoding process.

As can be seen from the above, the technical solutions provided by the present disclosure may perform the complexity analysis on video frames in the target video, so as to obtain the complexity of each target video frame. This complexity may reflect the richness of the content in the target video frames. In general, the richer the content, the higher the corresponding bitrate. Based on this, in the present disclosure, the complexity adjustment factor of a target video frame may be determined in advance according to the frame type and duration of the target video frame. The complexity adjustment factor may be used as a weight value for adjusting the bitrate. Next, for a to-be-encoded current video frame, the long-term complexity corresponding to the current video frame may be calculated based on the target video frames, before and after the current video frame, that have completed the complexity analysis. By comprehensively analyzing the long-term complexity and the preset reference number of bits per pixel, the target number of bits per pixel corresponding to the current video frame may be determined. According to the target number of bits per pixel and the configuration parameters of the target video to which the current video frame belongs, the target bitrate value used in the current encoding may be eventually determined. Later, according to the actual needs, the bitrate in the encoding process may be adjusted according to the target bitrate. As can be seen above, the present disclosure may first analyze the picture complexity of a to-be-encoded video frame, and then adjust the actual bitrate according to the analyzed picture complexity, thereby making the picture richness and the eventual bitrate to dynamically match each other. In addition, the users' watching experience can be ensured without wasting bandwidth. Therefore, the convenience of bitrate adjustment is greatly improved.

Through the description of the above embodiments, those skilled in the art may clearly understand that the various embodiments may be implemented by means of software plus a necessary general hardware platform, and of course, may also be implemented by hardware. Based on such understanding, the above-described technical solutions may be embodied in the form of software products in essence or in the form of software products, which may be stored in a computer-readable storage medium such as ROM/RAM, magnetic discs, optical discs, etc., and include a series of instructions for causing a computer device (which may be a personal computer, server, or network device, etc.) to perform the methods described in various embodiments or portions of the embodiments.

Although the present disclosure has been described as above with reference to preferred embodiments, these embodiments are not constructed as limiting the present disclosure. Any modifications, equivalent replacements, and improvements made without departing from the spirit and principle of the present disclosure shall fall within the scope of the protection of the present disclosure.

**Claims**

1. A method for bitrate adjustment in an encoding process, comprising:

    for a target video frame that has completed a complexity analysis, determining a complexity adjustment factor of the target video frame according to a frame type and a duration of the target video frame;
    acquiring a current video frame to be encoded, and calculating a long-term complexity corresponding to the current video frame according to complexities and complexity adjustment factors of target video frames that have completed the complexity analysis;
    determining a target number of bits per pixel corresponding to the current video frame according to the long-term complexity and a preset reference number of bits per pixel; and
    determining a target bitrate used by a current encoding according to the target number of bits per pixel and configuration parameters of a target video to which the current video frame belongs.

2. The method according to claim 1, wherein the complexity adjustment factor of the target video frame is determined according to a following formula:

$$W_t = W(type) \times W(duration)$$

wherein $W_t$ represents a complexity adjustment factor of a $t$-th target video frame, $W(type)$ represents a weight coefficient corresponding to a frame type of the $t$-th target video frame, and $W(duration)$ represents a weight coefficient corresponding to a duration of the $t$-th target video frame.

3.  The method according to claim 1, wherein calculating the long-term complexity corresponding to the current video frame further includes:

    determining a frame serial number difference between the last target video frame, that has completed the complexity analysis, and the current video frame;
    obtaining pre-frame influence coefficients and post-frame influence coefficients respectively, wherein a pre-frame influence coefficient is used to indicate an influence of a video frame, located before the current video frame, on the current video frame, and a post-frame influence coefficient is used to indicate an influence of a video frame, located after the current video frame, on the current video frame; and
    calculating the long-term complexity corresponding to the current video frame according to the complexities and the corresponding complexity adjustment factors of the target video frames, the frame serial number difference, the pre-frame influence coefficients, and the post-frame influence coefficients.

4.  The method according to claim 3, wherein:

    when performing the complexity analysis, downsampling an original video frame, and performing the complexity analysis for the downsampled video frame; and
    the method further includes:
    determining a ratio between a resolution of the original video frame and a resolution of the downsampled video frame, and adjusting the calculated long-term complexity based on the ratio.

5.  The method according to claim 4, further comprising:
    obtaining an encoding adjustment factor that matches encoding parameters of an encoder, and further adjusting the long-term complexity after the ratio-based adjustment according to the encoding adjustment factor.

6.  The method according to claim 5, wherein a long-term complexity after the further adjustment is calculated according to a following formula:

$$LC = M * scale * \frac{\sum_{i=0}^{t-T} C_i * W_i * decay^{t-T-i} + \sum_{i=t-T+1}^{t} C_i * W_i * grow}{\sum_{i=0}^{t-T} decay^{t-T-i} + \sum_{i=t-T+1}^{t} grow}$$

wherein $LC$ represents the long-term complexity after the further adjustment, $M$ represents the encoding adjustment factor, $scale$ represents the ratio, $t$ represents a frame serial number of the last target video frame that has completed the complexity analysis, T represents the frame serial number difference, $C_i$ represents a complexity of an i-th target video frame, $W_i$ represents a complexity adjustment factor of the $i$-th target video frame, $decay$ represents a pre-frame influence coefficient, and $grow$ represents a post-frame influence coefficient.

7.  The method according to claim 3, wherein, if a frame serial number of the current video frame cannot be obtained, the frame serial number difference is determined by:

    obtaining a maximum number of consecutive frames of bidirectional search frame of an encoder during the encoding, and determining a first number of video frames that currently have been transmitted to the encoder, and a second number of video frames that currently have been output by the encoder; and
    calculating a sum of the second number of video frames and the maximum number of consecutive frames, and determining a difference, between the first number of video frames and the sum of the second number of video frames and the maximum number of consecutive frames, as the frame serial number difference.

8. The method according to claim 1, wherein determining the target number of bits per pixel corresponding to the current video frame further includes:
calculating a ratio between the long-term complexity and a long-term complexity reference value, and determining, according to the calculated ratio and the preset reference number of bits per pixel, the target number of bits per pixel according to one of the following formulas:

$$BPP = rf^a * BPP_{base},$$

$$BPP = BPP_{base} * log_2(1 + rf),$$

and

$$BPP = \frac{(a+1) * rf}{a + rf} BPP_{base}$$

wherein *BPP* represents the target number of bits per pixel, *a* represents a preset index parameter, *rf* represents the calculated ratio, and *BPP_{base}* represents the preset reference number of bits per pixel.

9. The method according to claim 1, wherein:

the configuration parameters of the target video include at least a frame rate of the target video, a width and a height of a video frame in the target video; and
determining the target bitrate value used by the current encoding according to the following formula:

$$R = BPP * W * H * Fr$$

wherein R represents the target bitrate used for the current encoding, *BPP* represents the target number of bits per pixel, *W* represents the width of the video frame in the target video, *H* represents the height of the video frame in the target video, and *Fr* represents the frame rate of the target video.

10. The method according to claim 1, wherein performing the complexity analysis of the target video frame further includes:

after splitting the target video frame into a specified number of picture blocks, calculating an inter-frame prediction value and an intra-frame prediction value of a picture block;
determining a time complexity of the picture block based on a difference between the inter-frame prediction value of the picture block and original pixel values of the picture block, and determining a space complexity of the picture block based on a difference between the intra-frame prediction value of the picture block and the original pixel values of the picture block; and
taking the smaller of the time complexity and the space complexity as a complexity of the picture block, and determining the complexity of the target video frame according to a complexity of each picture block of the specified number of picture blocks.

11. The method according to claim 1, wherein, after determining the target bitrate used by the current encoding, the method further includes:
if the current video frame satisfies bitrate adjustment criteria, after a bitrate of the current encoding is adjusted to the target bitrate, encoding the current video frame according to the target bitrate.

12. A device for bitrate adjustment in an encoding process, comprising:

a complexity adjustment factor determination unit that is configured to, for a target video frame that has completed a complexity analysis, determine a complexity adjustment factor of the target video frame according to a frame type and a duration of the target video frame;
a long-term complexity calculation unit that is configured to acquire a to-be-encoded current video frame, and calculate a long-term complexity corresponding to the current video frame according to complexities and complexity adjustment factors of target video frames that have completed the complexity analysis;

a target number of bits per pixel determination unit that is configured to determine a target number of bits per pixel corresponding to the current video frame according to the long-term complexity and a preset reference number of bits per pixel; and

a target bitrate determination unit that is configured to determine a target bitrate used by a current encoding according to the target number of bits per pixel and configuration parameters of a target video to which the current video frame belongs.

13. The device according to claim 12, wherein the long-term complexity calculation unit further includes:

a frame serial number difference determination module that is configured to determine a frame serial number difference between the last target video frame that has completed the complexity analysis and the current video frame;

an influence coefficient acquisition module that is configured to obtain pre-frame influence coefficients and post-frame influence coefficients respectively, wherein a pre-frame influence coefficient is used to indicate an influence of a video frame, located before the current video frame, on the current video frame, and a post-frame influence coefficient is used to indicate an influence of a video frame, located after the current video frame, on the current video frame; and

a calculation module that is configured to calculate the long-term complexity corresponding to the current video frame according to the complexities and the corresponding complexity adjustment factors of the target video frames, the frame serial number difference, the pre-frame influence coefficients, and the post-frame influence coefficients.

14. The device according to claim 13, wherein the frame serial number difference determination module further includes:

a frame number acquisition module that is configured to, if a frame serial number of the current video frame cannot be obtained, obtain a maximum number of consecutive frames of bidirectional search frame of an encoder during the encoding, and determine a first number of video frames that currently have been transmitted to the encoder and a second number of video frames that currently have been output by the encoder; and

a difference calculation module that is configured to calculate a sum of the second number of video frames and the maximum number of consecutive frames, and determine a difference, between the first number of video frames and the sum of the second number of video frames and the maximum number of consecutive frames, as the frame serial number difference.

15. A device for bitrate adjustment in an encoding process, comprising a processor and a memory, wherein the memory is used for storing a computer program that is configured to, when executed by the processor, implement the method according to any one of claims 1 to 11.

For target video frame that has completed complexity analysis, determine complexity adjustment factor of target video frame according to frame type and duration of target video frame

S1

Acquire to-be-encoded current video frame, and calculate long-term complexity corresponding to current video frame according to complexities and complexity adjustment factors of target video frames that have completed complexity analysis

S3

Determine target number of bits per pixel corresponding to current video frame according to long-term complexity and preset reference number of bits per pixel

S5

Determine target bitrate used by current encoding according to target number of bits per pixel and configuration parameters of target video to which current video frame belongs

S7

**FIG. 1**

Bitrate Adjustment Device

Complexity Adjustment Factor
Determination Unit

Long-term Complexity
Calculation Unit

Target Number of Bits Per Pixel
Determination Unit

Target Bitrate
Determination Unit

**FIG. 2**

Processor

Bus

Memory

Computer
Programs

Bitrate Adjustment Device

**FIG. 3**

# EP 3 637 770 A1

TRANSLATION

## INTERNATIONAL SEARCH REPORT

International application No.

**PCT/CN2018/108245**

### A. CLASSIFICATION OF SUBJECT MATTER

H04N 19/146(2014.01)i; H04N 19/142(2014.01)i; H04N 7/24(2011.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 编码, 码率, 比特, 调整, 控制, 视频, 帧, 复杂度, 像素, 权重, 权值, 加权, encode, code, rate, bit, adjust, control, video, frame, complexity, pixel, weight

### C. DOCUMENTS CONSIDERED TO BE RELEVANT

| Category* | Citation of document, with indication, where appropriate, of the relevant passages | Relevant to claim No. |
|---|---|---|
| A | CN 101895758 A (NANJING UNIVERSITY OF INFORMATION SCIENCE & TECHNOLOGY) 24 November 2010 (2010-11-24) claims 1-4, and description, paragraphs 0006-0015 | 1-15 |
| A | CN 105187832 A (CHENGDU GOLDENWAY ELECTRONIC CO., LTD.) 23 December 2015 (2015-12-23) entire document | 1-15 |
| A | CN 106791837 A (BEIJING SUMAVISION TECHNOLOGIES CO., LTD.) 31 May 2017 (2017-05-31) entire document | 1-15 |
| A | CN 104994387 A (NINGBO UNIVERSITY) 21 October 2015 (2015-10-21) entire document | 1-15 |
| A | CN 108235016 A (HANGZHOU HIKVISION DIGITAL TECTECHNOLOGY CO., LTD.) 29 June 2018 (2018-06-29) entire document | 1-15 |
| A | CN 108174210 A (HANGZHOU XIONGMAI INTEGRATED CIRCUIT TECHNOLOGY CO., LTD.) 15 June 2018 (2018-06-15) entire document | 1-15 |

☑ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 April 2019** | **30 April 2019** |

| Name and mailing address of the ISA/CN | Authorized officer |
|---|---|
| **State Intellectual Property Office of the P. R. China No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

TRANSLATION

**INTERNATIONAL SEARCH REPORT**

| | International application No. |
|---|---|
| | PCT/CN2018/108245 |

**C. DOCUMENTS CONSIDERED TO BE RELEVANT**

| Category* | Citation of document, with indication, where appropriate, of the relevant passages | Relevant to claim No. |
|---|---|---|
| A | CN 103561266 A (DIGITAL TELEVISION TECHNOLOGY CENTER, BEIJING PEONY ELECTRONIC GROUP CO., LTD.) 05 February 2014 (2014-02-05) entire document | 1-15 |
| A | WO 2012058394 A1 (VID SCALE, INC.) 03 May 2012 (2012-05-03) entire document | 1-15 |

Form PCT/ISA/210 (second sheet) (January 2015)

TRANSLATION

**INTERNATIONAL SEARCH REPORT**
Information on patent family members

International application No.

**PCT/CN2018/108245**

| Patent document cited in search report | | | Publication date (day/month/year) | Patent family member(s) | | | Publication date (day/month/year) |
|---|---|---|---|---|---|---|---|
| CN | 101895758 | A | 24 November 2010 | CN | 101895758 | B | 18 July 2012 |
| CN | 105187832 | A | 23 December 2015 | CN | 105187832 | B | 22 June 2018 |
| CN | 106791837 | A | 31 May 2017 | | None | | |
| CN | 104994387 | A | 21 October 2015 | CN | 104994387 | B | 31 October 2017 |
| CN | 108235016 | A | 29 June 2018 | WO | 2018113191 | A1 | 28 June 2018 |
| CN | 108174210 | A | 15 June 2018 | | None | | |
| CN | 103561266 | A | 05 February 2014 | CN | 103561266 | B | 02 November 2016 |
| WO | 2012058394 | A1 | 03 May 2012 | EP | 2633685 | A1 | 04 September 2013 |
| | | | | KR | 20130105870 | A | 26 September 2013 |
| | | | | AU | 2011319844 | A1 | 13 June 2013 |
| | | | | CN | 103283227 | A | 04 September 2013 |

Form PCT/ISA/210 (patent family annex) (January 2015)